# EUROPEAN PATENT APPLICATION

(11) **EP 4 485 231 A1**
(43) Date of publication of application: **01.01.2025**
(21) Application number: 23181659.6
(22) Date of filing: 27.06.2023
(51) Int. Cl.: G06F 16/955, G06F 16/958

(54) **COMPUTER-IMPLEMENTED METHOD AND SYSTEM TO MAP AT LEAST ONE HYPERLINK FROM A FIRST CONTEXT TO ANOTHER SECOND CONTEXT**

(71) Applicant: Siemens Aktiengesellschaft, 80333 München (DE)
(72) Inventor: Ledentsov, Dmitry, 81549 München (DE); Lindner, Bernd, 85551 Kirchheim (DE)
(74) Representative: Siemens Patent Attorneys

(57) **Abstract**

The present invention relates to a computer-implemented method and to map at one hyperlink (HY) from a first context (CX1) stored on a first storage to another second context (CX1') stored on a second storage wherein said subset of content is to move or has been moved to the second context from the first context to the second context, comprising the following method steps:
- providing a first list of the content of the subset in the first context whereby a first path scheme of said at least one hyperlink is provided,
- providing a second list of content in the second context whereby a second path scheme of at least one further hyperlink to be used in the second context is provided,
- providing a mapping table, whereby the content of the mapping table results from at least one definable matching function whose inputs comes from the first and second lists and which maps at least one hyperlink used in the first context onto the at least one further hyperlink to be used in the second context, whereby the at least one matching function defines matching rules which are derived from the first and second path scheme and are applied in the case of meeting at least one matching rule, and
- storing the provided mapping table accessible to a hyperlink managing server managing the hyperlinks associated to the first and second storage.

## Description

The present invention relates to method to map at least one hyperlink from a first context to another second context, wherein at least a subset of content and/or its metadata is to move or has been moved from the first context to the second context.

### BACKGROUND OF THE INVENTION

User organizes and publishes content on internet or intranet websites/-pages (WEB - World wide Web or an enterprise intranet). Some websites manage content for users, adding features beyond simple document authoring, such as cross-linking content or providing an organization structure around content. Content usually stored on a storage is externally addressable by means of hyperlinks. Hyperlinks are used in particular to link a source page and/or document on the Internet to a target page and/or document. Hyperlinks usually begin with a base URL, followed by the rest of the hyperlink path, and sometimes query parameters. The website renders the desired content to the user requesting the content referred to by the hyperlink unless the user is unauthorized.

The webpages/-documents can be displayed on an output device, e.g. on a display. The user can be a human being or a bot (https://en.wikipedia.org/wiki/Internet_bot) .

Content may outlive the websites where it has been published on. This content is to move or has been moved to other websites. This can happen due to branding, financial or other reasons. When content is moved from a first website to another second website, the base URL of the content might change unless the new second website is available at the same base URL. A website is usually stored on a storage which can be on a server and/or in a database. The hyperlink paths to the moved content may change due to a changed server and/or a changed storage and/or changed database with different database Identifiers (ID) and/or URL scheme whereby the URL refers to the website.

The website which is accessible under the hyperlinks is herewith named a first context or context 1, when the content is moved into a new second context, then named context 1'. In this case, the hyperlinks lose their validity. These hyperlinks can be stored in content of another website, herewith named context 2. After the migration (moving) of content from Context 1 to Context 1', the hyperlinks to Context 1 in a third context, also named Context 2, must be replaced to the corresponding ones in Context 1', so that users or crawlers (https://en.wikipedia.org/wiki/Web_crawler) can follow the hyperlinks to the correct content.

Since content migrations are usually a very custom and variable process and often happens without notifying the readers or other context owners, hyperlinks in other contexts become broken. Usually, the broken hyperlinks are manually replaced on demand by means of searching for the missing content at potential new locations.

Hyperlinks in content that lack the cues as to what the linked content is titled, pose a significant challenge for finding replacement hyperlinks, as the original ones lose their relevance and connection to desired content.

So managing and maintaining these hyperlinks is laborious and time-consuming.

In view of this, it is an objective of the present invention to present an improved concept or method or system that assists searching for the moved content due to invalid hyperlinks.

### SUMMARY OF THE INVENTION

The above-mentioned object is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

The invention claims a computer-implemented method to map at least one hyperlink from a first context stored on a first storage to another second context stored on a second storage wherein said subset of content is to move or has been moved from the first to the second context, comprising the following method steps:
- providing a first list of the content of the subset in the first context whereby a first path scheme of said at least one hyperlink is defined and/or provided,
- providing a second list of content in the second context whereby a second path scheme of at least one further hyperlink to be used and/or to be included in the second context is defined and/or provided,
- providing a mapping table, whereby the content of the mapping table results from at least one definable matching function whose inputs comes from the first and second lists and which maps at least one hyperlink used in the first context onto the at least one further hyperlink to be used in the second context, whereby the at least one matching function defines matching rules which are derived from the first and second path scheme and are applied in the case of meeting at least one matching rule, and
- storing the provided mapping table accessible to a hyperlink managing server managing the hyperlinks associated to the first and second storage.

The method steps may further comprise replacing and/or converting, by the hyperlink managing unit, at least one hyperlink in a third context on a third storage, which refers to the content of the first context, with the at least one further hyperlinks using in the mapping table.

Each content may comprise metadata (e.g. ID, namespace), which can be entered into the mapping table.

A path scheme of each least one hyperlink is at least partly defined by the metadata.

A matching rule can represent rule for an entirely or partly string replacement set via user interaction receivable by the hyperlink managing unit.

The replacing/converting may follow the order: firstly the entirely or secondly partly string replacement.

Usually, a hyperlink is functioning well if the matching is successful. Otherwise the hyperlink is incorrectly/invalid matched. This hyperlink can guide to an incorrect content and/or webpage.

A technical benefit to make sure that hyperlinks are functioning is particularly in the case that a computer or other technical system needs to be regularly updated. Hyperlinks often point to at least one software piece for download or to another software information for retrieval in order to be used in subsequent processing. If the hyperlink is broken or mal- or dysfunctioning then the hyperlink refers to a content, but the content is not the originally intended content. So a download of the "wrong" content happens and/or a retrieval fails. The subsequent information processing or update process does not happen. This may lead to information loss or misfunctioning in the (computer/technical) system.

The invention further claims a system suitable to map at least one hyperlink from a first context stored on a first storage to another second context stored on a second storage wherein said subset of content is to move or has been moved from the first context to the second context, wherein a processor is configured to:
- providing a first list of the content of the subset in the first context whereby a first path scheme of said at least one hyperlink is defined and/or provided,
- providing a second list of content in the second context whereby a second path scheme of at least one further hyperlink to be used and/or to be included in the second context is defined and/or provided,
- providing a mapping table, whereby the content of the mapping table results from at least one definable matching function whose inputs comes from the first and second lists and which maps at least one hyperlink used in the first context onto the at least one further hyperlink to be used in the second context, whereby the at least one matching function defines matching rules which are derived from the first and second path scheme and are applied in the case of meeting at least one matching rule, and
- storing the provided mapping table accessible to a hyperlink managing server managing the hyperlinks associated to the first and second storage.

The one or more processors can be integrated into the system and interfaces/units and distributed organized on servers or in a cloud.

Embodiments as described above for the system can be analogous applied for the method and for computer program (product) and for the computer-readable storage medium.

This system and the device can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. In the figures, identical or functionally identical elements are denoted by identical reference signs. Included in the drawings are the following figures:
Figure 1 illustrates an environment where the invention can be employed, and
Figure 2 depicts an algorithm for replacing hyperlinks.

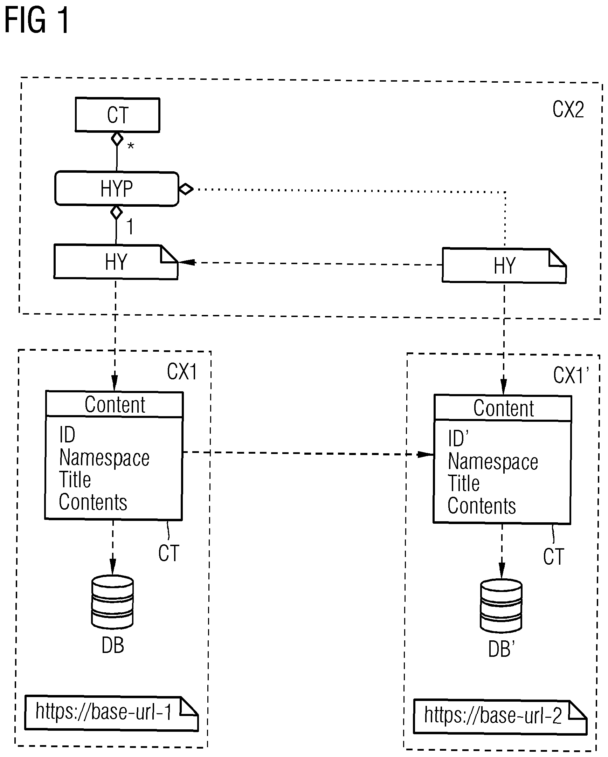

Figure 1 shows an environment where the invention can be employed. There are three websites, in this example named contexts CX1, CX1'and CX2.

Each context can be stored in a storage of a server. The context including its content CT can also be stored in a Database DB and DB'respectively. Given is a set of link placeholders HYP (e.g. Hyperlinks) in content CT from a third context CX2. If at least a subset of content CT and at least one hyperlink HY from the first context CX1 stored on a first storage to the second context CX1' stored on a second storage, which can also the same storage as the first storage, a hyperlink replacement is required. Therefore, the placeholder HYP needs a new association to the context CX1'. A Link of the hyperlink HY to Content CT is based on an Identifier (ID) from the Database DB and DB' respectively. An example for a content CT stored in the database is shown in figure 1. It can include the following Content tuple: metadata as ID (depends on the storage/DB ID), Namespace, Title and the content itself. Figure 1 shows further an example for a URL (hyperlink): https://base-url-1 in context CX1 and https://base-url-2 in context CX2.

An URL scheme is defined and provided. The URL scheme can be used to derive URLs from above tuple information, such as https://{base-url}/{namespace}/{url-encoded-title} or https://{base-url}/{some-prefix}/{some-id-derived-from-storage-id}.

A not shown hyperlink managing server manages the hyperlinks associated to the placeholder.

The invention relates to mapping hyperlinks from one context to another one, where the content is assumed to have been moved or is moving to.

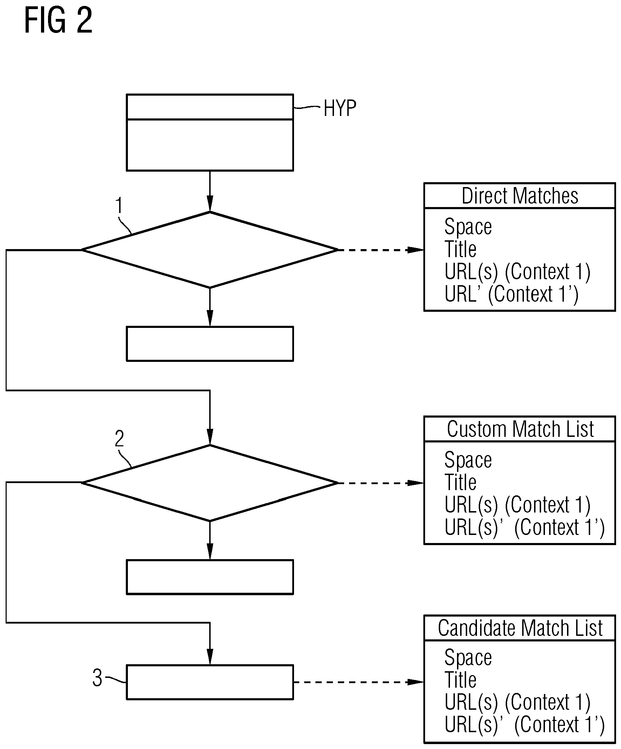

A not shown system is suitable for the above mapping in the new context. The system can be connected to or integrated into the hyperlink managing server. A mapping table is provided by the system which can be stored and accessed by the hyperlink managing server. The mapping table is designed for replacing the links automatically and/or manually in a context, e.g. in Figure 2 CX2, that contains hyperlinks to the original context.

The method comprises listing a subset of content, particularly its metadata, and the associated hyperlinks in both the original context CX1 and the new context CX 1', but usually not the other context CX2 that contains hyperlinks to the original context. Then the following steps are performed:
- Providing a list of content in context CX1, particularly including its metadata, such as content ID, Namespace (a feature of content organization, whereby content may belong to a namespace exclusively), and Title.
- A path scheme is given which can be used to derive URLs from above information. This metadata is pre-computed and added to the list of content above, and this information is stored for future mapping.
- The migration of the content to a new location is performed.
- Providing a list of content in context CX1' and the corresponding URLs are generated in the same fashion as above for the original context. It is possible that each part of the new URLs changes.
- A mapping table from old hyperlinks onto new hyperlinks is provided.
- Hyperlinks in context CX2 are updated (replaced) based on the mapping table.
- The mapping table can be built as following:
- A matching function that has the lists of Content from both contexts as input, and a list of matches as output is run on the two lists. Each match on result of the function is "True" results in a so-called Custom Match List. Matching rules in the matching function can be derived from the path schemes in both contexts. The matching function becomes "true" if a matching rule is met.
- Matching rules in the matching function can be configured as such that content that matches metadata as Namespace and Title in both Contexts 1 and 1' results in a so-called Direct Match List. The match combines the old and new content metadata.
- Content that partly matches the metadata, for instance, only the Title in both Contexts CX1 and CX1', and that is not filtered by a Title Filter results in a so-called Candidate Match List.
- Each match in the above-mentioned match lists contains a reference to the matched Content in Contexts CX1 and CX1'.

Examples of the match lists are shown in figure 2. The match lists are included in the mapping table which is stored and accessible to the hyperlink managing server. The hyperlink managing server adjusts the hyperlinks in external context e.g. CX2.

Given a set of Link Placeholders (e.g. Hyperlinks) containing the text URL in content from context CX2, the following replacement algorithm shown in the flow chart of Figure 2 can be executed: Steps are marked by numbers:
Step 1: Searching for URLs matching an URL in Context CX1. If a so called "direct match" is identified then replace the string of the URL with URL from context 1'. Direct Match means: there are matching rules which are configured as such that matching in both (URL maybe of CX1'; URL of CX1) metadata has been reached a matching degree of 100%.

Otherwise:
Step 2: If there is a single match then replace URL with URL from context 1'. A single match means: there are matching rules which are configured as such that an entirely or partly string replacement set via user interaction is possible. User interaction is receivable by the hyperlink managing server.

For instance, such matching can happen, if the content changes the language e.g. from German "de" to English "en". A matching function employed on above mentioned both URLs can be configured whereby a rule for the matching function is derived from the path (URL) scheme if both URL schemes are highly similar or identical or if each URL schemes follows its own structure.

For example: URL: https://base-url-1/de; and https://base-url-1/en Another matching rule is possible and
can be used to derive URLs such as https://{base-url}/{namespace}/{url-encoded-title} or https://{base-url}/{some-prefix}/{some-id-derived-from-storage-id}, this metadata is pre-computed and added to the list of content above. If an URL contains a prefix then the prefix will be skipped (left out) by the hyperlink replacement.

Otherwise but optionally:
Step 3: If there is a partly match in the metadata, e.g. above all in the title, then replace URL with URL from context 1'. A partly match leads to one or several URL candidates which need to be selected. Selected URL fits best to URL e.g. of CX1.

This algorithm terminates after one run or can be repeated as often as needed.

As used herein, the term "a technical system" refers, for example, to a device, apparatus or a plant. A technical system can, for example, be an edge device Typically, the technical system comprises a plurality of interconnected hardware components and/or software modules. Furthermore, the technical system can, for example, comprise at least one component having a communication interface configured to connect an apparatus/system to an environment, user and/or other system.

Here and in the following, interface, function, storage as well as other units or devices referred to, may for example be software modules of a computer program for carrying out the computer-implemented method. Alternatively, the modules may interact with respective hardware components with software for carrying out the respective steps stored on them.

The invention has been described in detail with reference to embodiments thereof and examples. Variations and modifications are possible. Instead of the above-described production process one or more processes can analogously be applied to other technical systems.

The system can be (computer-)implemented for performing the inventive method steps.

This system can compriseBrowser (Website), or a Desktop Application.

It can include one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the system and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. Computer-implemented method to map at least one hyperlink (HY) from a first context (CX1) stored on a first storage to another second context (CX1') stored on a second storage wherein at least a subset of content is to move or has been moved from the first context to the second context, comprising the following method steps:
- providing a first list of the content of the subset in the first context whereby a first path scheme of said at least one hyperlink is provided,
- providing a second list of content in the second context whereby a second path scheme of at least one further hyperlink to be used in the second context is provided,
- providing a mapping table, whereby the content of the mapping table results from at least one definable matching function whose inputs comes from the first and second lists and which maps at least one hyperlink used in the first context onto the at least one further hyperlink to be used in the second context, whereby the at least one matching function defines matching rules which are derived from the first and second path scheme and are applied in the case of meeting at least one matching rule, and
- storing the provided mapping table accessible to a hyperlink managing server managing the hyperlinks associated to the first and second storage.

2. Method according to the previous claim, wherein the method steps further comprise replacing by the hyperlink managing unit, at least one hyperlink in a third context (CX2) on a third storage, which refers to the content of the first context, with the at least one further hyperlink using in the mapping table.

3. Method according to any of the preceding claims, wherein each content comprises metadata.

4. Method according to the previous claim, wherein a path scheme of each least one hyperlink is at least partly defined by the metadata.

5. Method according to any of the preceding claims, wherein a matching rule represents rules for an entirely or partly string replacement set via user interaction receivable by the hyperlink managing unit.

6. Method according to the preceding claims 4, wherein the replacing follows firstly the entirely and secondly partly string replacement.

7. System suitable to map at least one hyperlink (HY) from a first context (CX1) stored on a first storage to another second context (CX1') stored on a second storage wherein said subset of content is to move or has been moved from the first context to the second context, wherein a processor is configured to:
- providing a first list of the content of the subset in the first context whereby a first path scheme of said at least one hyperlink is provided,
- providing a second list of content in the second context whereby a second path scheme of at least one further hyperlink to be used and/or to be included in the second context is provided,
- providing a mapping table, whereby the content of the mapping table results from at least one definable matching function whose inputs comes from the first and second lists and which maps at least one hyperlink used in the first context onto the at least one further hyperlink to be used in the second context, whereby the at least one matching function defines matching rules which are derived from the first and second path scheme and are applied in the case of meeting at least one matching rule, and
- storing the provided mapping table accessible to a hyperlink managing server managing the hyperlinks associated to the first and second storage.

8. Computer program product which is being executed by one or more processors of a computer or of the system according to any of the preceding system claims in order to execute a method according to any of the preceding method claims.
